# FASCICULE DE BREVET EUROPEEN

(11) **EP 3 449 102 B1**
(45) Date de publication et mention de la délivrance du brevet: **05.10.2022**
(21) Numéro de dépôt: 17718912.3
(22) Date de dépôt: 21.04.2017
(51) Int. Cl.: G21D 3/04, F01K 9/00, G21D 1/04

(54) **GESTION D'UN POMPAGE D'ALIMENTATION EN EAU D'UN CIRCUIT D'UNE INSTALLATION DE PRODUCTION ÉLECTRIQUE**
VERWALTUNG VON WASSERVERSORGUNGSPUMPEN FÜR EINE STROMERZEUGUNGSANLAGENKREIS
MANAGING WATER-SUPPLY PUMPING FOR AN ELECTRICITY PRODUCTION PLANT CIRCUIT

(30) Priorité: 28.04.2016 FR 1653811
(43) Date de publication de la demande: 06.03.2019
(73) Titulaire: Electricité de France, 75008 Paris (FR)
(72) Inventeur: DE OLIVEIRA, Eric, 78290 CROISSY SUR SEINE (FR); VAUTRIN, Denis, 92000 NANTERRE (FR); BOUSQUET, Nicolas, 94300 VINCENNES (FR); PAUL, Nicolas, 93100 MONTREUIL (FR); ZOUBERT-OUSSENI, Kersane, 38100 GRENOBLE (FR)
(74) Mandataire: Plasseraud IP
(86) Numéro de dépôt international: PCT/EP2017/059578
(87) Numéro de publication internationale: WO 2017/186603

(56) Documents cités:
- WO-A1-02/090719
- DE-A1- 3 732 633
- US-A- 4 006 596
- US-A- 5 060 600
- US-A1- 2009 188 645
- US-A1- 2012 273 407

## Description

La présente invention concerne le domaine du pompage d'alimentation en eau d'un circuit d'une installation de production électrique.

Dans certaines centrales de production électrique, notamment des centrales nucléaires, la source froide est apportée par de l'eau issue de cours d'eau naturels (eau de mer, eau de rivière). Cette eau est pompée par un dispositif de pompage pour son injection dans le circuit froid.

Néanmoins, cette eau peut contenir des algues, des sédiments issus de la mer, des détritus issus de rivière, etc.

US-5,060,600 présente un condensateur avec un agencement particulier pour éviter un encrassement lié à ces détritus. US-2012/273407 présente une forme particulière de filtre pour ce type de détritus. US-2009/188645 décrit quant à lui un moyen de mesure quantifiant cet encrassement.

Habituellement, cette eau est filtrée bien entendu, de manière à ne pas laisser passer ces éléments colmater le circuit froid. A cet effet, on utilise des tambours filtrants en amont du circuit.

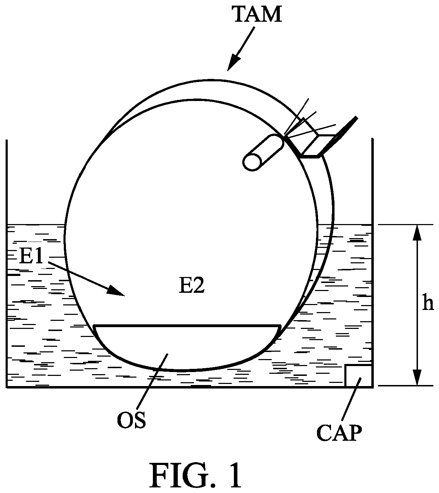

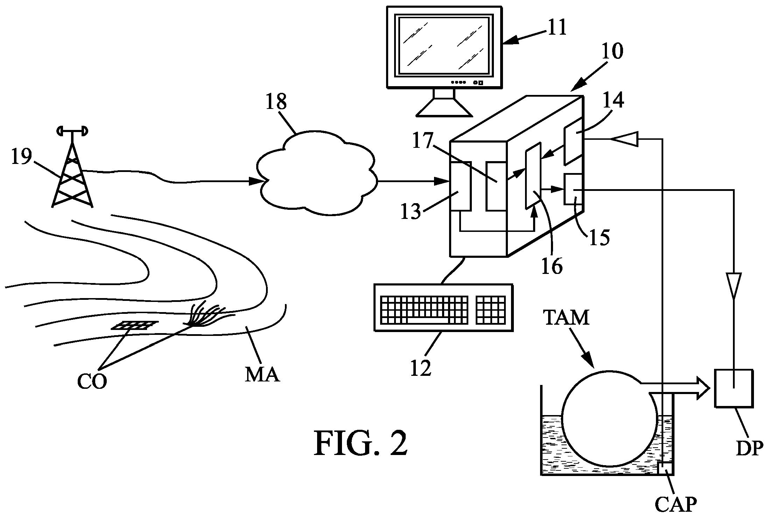

Ces tambours sont susceptibles d'être mis en rotation pour éjecter les éléments colmatant (appelés « colmatants » ci-après). La vitesse de rotation de ces tambours est variable en fonction du degré de colmatage qu'ils subissent. Ce degré de colmatage est mesuré en fonction d'une différence de pression, ou encore de hauteurs d'eau constatée de part et d'autre d'une paroi dans laquelle est placé le tambour filtrant, comme illustré à titre d'exemple sur la figure 1. En référence à la figure 1, un tambour de filtrage TAM comporte typiquement des tamis pour filtrer une eau brute E1 et délivrer de l'eau filtrée E2 par des ouïes de sortie OS. En référence maintenant à la figure 2, cette eau filtrée E2 peut être fournie à un dispositif de pompage DP alimentant le circuit d'eau (non représenté) d'une installation de production d'électricité. Un capteur CAP (par exemple mesurant une hauteur d'eau h dans une enceinte incluant le tambour TAM) peut donner une indication du degré de colmatage : par exemple, plus le tambour est colmaté et plus le niveau h est élevé. 2.

Plus précisément, le capteur CAP peut mesurer la différence de hauteur d'eau entre l'intérieur et l'extérieur des tambours filtrants (appelée « perte de charge »). En général, la mesure du capteur CAP est utilisée par une unité de commande (non représentée) de mise en rotation du tambour, en particulier pour appliquer la vitesse de rotation nécessaire au tambour afin de rendre le filtrage plus efficace.

Lorsqu'il s'avère que le colmatant est tel qu'une perte de charge trop importante est constatée et qu'il devient alors difficile d'utiliser cet approvisionnement d'eau E2, un opérateur (personne humaine) peut décider d'arrêter le dispositif de pompage, ce qui peut avoir des conséquences conduisant à l'arrêt d'une tranche de production.

Actuellement, la décision est prise par un opérateur humain. Or, l'enjeu lié à cette décision est important car il convient :
- d'une part, de s'assurer que l'arrivée de colmatant est bien de nature à devoir commander l'arrêt du dispositif de pompage, voire l'arrêt d'une tranche de production, et
- d'autre part, d'éventuellement anticiper l'arrivée d'un colmatant massif afin de prendre les mesures nécessaires pour ne pas risquer d'endommager des équipements de l'installation de production.

La présente invention vient améliorer la situation.

Elle propose à cet effet un procédé d'aide à la gestion d'un dispositif de pompe propre à alimenter un circuit d'une installation de production électrique selon la revendication 1.

Ainsi, le procédé de l'invention propose une aide fiable à la décision de désactiver le dispositif de pompe, cette désactivation s'accompagnant habituellement d'un arrêt de tranche, avec un impact économique sur l'exploitant de l'installation. D'un autre côté, un colmatage complet des tambours alors que l'installation est en état de fonctionnement peut être une source d'incidents nombreux. Dès lors, l'évaluation du risque est plus objective, et l'arrêt de tranche peut être justifié tout aussi objectivement.

Dans un mode de réalisation, le signal d'alerte est formé en vue de désactiver en outre le dispositif de pompe pendant une durée choisie en fonction du risque évalué.

Ainsi, ce mode de réalisation permet de décider à la fois quand le dispositif de pompe peut être arrêté, mais aussi de décider de la durée de cet arrêt.

Dans un exemple de réalisation où l'eau à pomper comprend de l'eau de mer, les paramètres relatifs au cours d'eau incluent au moins un coefficient de marée.

Une telle réalisation concerne typiquement les installations en bord de mer et le coefficient de marée est typiquement un descripteur possible pour déterminer si la marée peut amener ou non de la sare (les éléments colmatant précités) dans cet exemple.

Néanmoins, le coefficient de marée n'est pas l'unique paramètre possible et les paramètres précités, relatifs au cours d'eau, peuvent inclure en complément ou en variante des données hydrologiques parmi au moins un horaire de pleine mer/basse mer.

En complément ou en variante encore, l'eau à pomper peut comprendre de l'eau d'une rivière et les paramètres relatifs au cours d'eau incluent des données hydrologiques comprenant un débit moyen et/ou une hauteur d'eau dans la rivière. Par exemple dans le cas d'un estuaire en bord de mer, on peut prendre en compte en outre le coefficient de marée et/ou un horaire de pleine mer/basse mer, en plus du débit moyen, typiquement.

Les paramètres relatifs au cours d'eau peuvent inclure en outre des données météorologiques de vitesse et de direction du vent par rapport au cours d'eau.

Dans une forme de réalisation, au cours de l'étape courante, on relève en outre des paramètres courants de colmatage sur les filtres et on utilise le modèle statistique avec :
- les paramètres courants relatifs au cours d'eau, et
- les paramètres courants de colmatage.

Ainsi, il est possible d'utiliser des capteurs (préexistants comme décrit ci-après) pour enrichir l'entrée du modèle avec des paramètres mesurés in situ en temps réel.

Par exemple, les filtres peuvent comporter des tambours filtrant mis en rotation pour éjecter tout ou partie des matériaux colmatant comme indiqué ci-avant. Habituellement, la vitesse de rotation des tambours est pilotée en fonction d'une information de colmatage relevée par au moins un capteur. Ainsi, les paramètres précités de colmatage peuvent comporter l'information de colmatage que relève ce capteur. Il peut s'agir typiquement du capteur CAP présenté ci-dessus en référence à la figure 1.

Dans une réalisation, le modèle statistique appliqué est par exemple issu de l'application de la méthode dite de Parzen avec des descripteurs comprenant :
- les paramètres relatifs au cours d'eau, et
- les paramètres de colmatage.

Bien entendu, des modèles gaussiens ou autres peuvent être prévus en variante.

L'invention vise aussi un programme informatique selon la revendication 10, comportant des instructions pour la mise en œuvre du procédé ci-avant, lorsque ce programme est exécuté par un processeur. Elle vise aussi un dispositif d'aide à la gestion d'un dispositif de pompe, comportant un circuit de traitement pour la mise en œuvre du procédé ci-avant selon la revendication 11.

Ainsi, la mise en œuvre de l'invention vient affiner le diagnostic de colmatage et permet d'obtenir un signal d'alerte sur une arrivée effective de colmatant. Ce signal peut prendre la forme d'un message sur une interface homme/machine à destination d'un utilisateur (opérateur humain), éventuellement avec des données quantitatives communiquées à l'utilisateur, ou encore sous la forme d'un signal de commande directement du dispositif de pompage pour désactiver ce dernier à un instant choisi, prévu pour l'arrivée des colmatants (pour l'arrêt du dispositif de pompage ou tout au moins pour une modification de sa consigne de fonctionnement par exemple).

D'autres avantages et caractéristiques de l'invention apparaitront à l'examen de la description détaillée d'exemples de réalisation donnés ci-après et à l'examen des dessins annexés, sur lesquels :
- La figure 1 illustre schématiquement un tambour d'un dispositif de pompage d'eau d'alimentation d'une installation de production électrique,
- La figure 2 illustre schématiquement un système global incluant un dispositif au sens de l'invention,
- La figure 3 illustre les étapes d'un procédé selon un exemple de réalisation de l'invention,
- Les figures 4a et 4b illustrent des fonctions de vraisemblance pour la mise en œuvre d'une méthode de classification dans un exemple de réalisation visant l'apprentissage d'une règle de décision (d'arrêt ou non d'un dispositif de pompage), et
- La figure 5 compare une courbe temporelle de probabilité de colmatage, à comparer avec une mesure de perte de charge donnée en temps réel par le capteur CAP.

On se réfère tout d'abord à la figure 2 sur laquelle une unité de traitement 10, par exemple un ordinateur à disposition d'un utilisateur, et/ou capable de piloter en outre le dispositif de pompage DP comporte, dans l'exemple représenté :
- une interface d'entrée 13, pour recevoir via un réseau 18 notamment des données météorologiques (par exemple issues d'une station 19), ainsi que des données hydrologiques (coefficient de marée, horaire de marée haute/marée basse, hauteur d'eau d'un fleuve ou d'une rivière, débit, etc.) ; il peut s'agir typiquement d'une connexion Internet ou à un réseau quelconque ;
- une interface d'entrée 14 connectée au capteur CAP (par exemple via un réseau local, filaire ou non), afin d'obtenir une donnée de colmatage in situ des tambours TAM,
- une interface de sortie 15 pour piloter le dispositif de pompe DP, dans le cas d'une mise en œuvre complètement automatisée sans faire intervenir un opérateur,
- un processeur 16, capable de coopérer avec les interfaces d'entrée et de sortie précitées et avec une mémoire 17 (comportant un stockage durable notamment d'instructions du programme informatique au sens de l'invention, ainsi qu'un stockage éventuellement temporaire de données de calcul par exemple).

L'unité de traitement 10 peut comporter en outre des connexions supplémentaires à :
- un écran 11 pour permettre à un opérateur de visualiser par exemple un message d'alerte d'arrivée imminente d'éléments colmatant CO (par exemple des débris et des algues arrivant dans quelques heures avec une marée MA) ; et
- un organe de saisie 12, tel qu'un clavier, un écran tactile ou autre, pour valider par exemple un ordre d'arrêt du dispositif de pompe DP.

Ainsi, le processeur 16, en fonction des différents éléments d'information acquis par les interfaces d'entrée, est en mesure d'exécuter le procédé présenté ci-avant pour alerter l'opérateur, ou désactiver directement le dispositif de pompe DP.

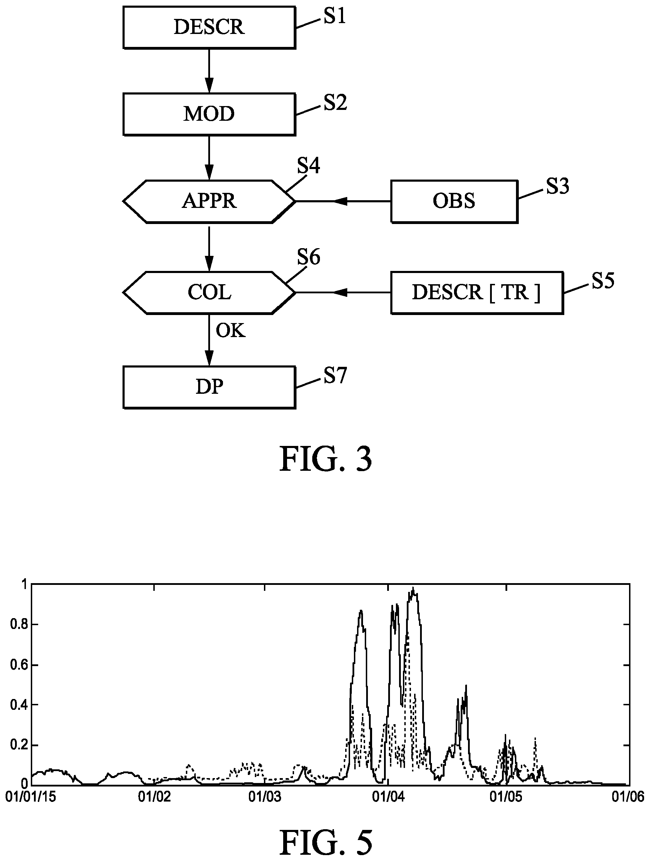

On se réfère maintenant la figure 3 pour décrire le procédé que met en œuvre l'unité de traitement10. La première étape S1 consiste à prendre en compte un choix de descripteurs. Il peut s'agir typiquement de paramètres dérivés de mesures hydrologiques, météorologiques et de commande de vitesse de rotation des tambours (vitesse moyenne ou grande vitesse, pilotée par réaction au signal qu'envoie le capteur CAP). Ces descripteurs, dans l'exemple de réalisation présenté ci-après pour une application dans un estuaire, ont été choisis à l'étape S1 au nombre de six et sont dans cet exemple de réalisation :
- un minimum de hauteur d'eau mesurée,
- une cote minimale d'eau,
- un écart temporel avec un précédent pic de débit,
- une somme sur trois marées du nombre maximal de déclenchements de la rotation des tambours en vitesse moyenne,
- une somme sur trois marées du nombre maximal de déclenchements de la rotation des tambours en grande vitesse,
- une durée cumulée maximale du fonctionnement des tambours en rotation à grande vitesse pendant une marée.

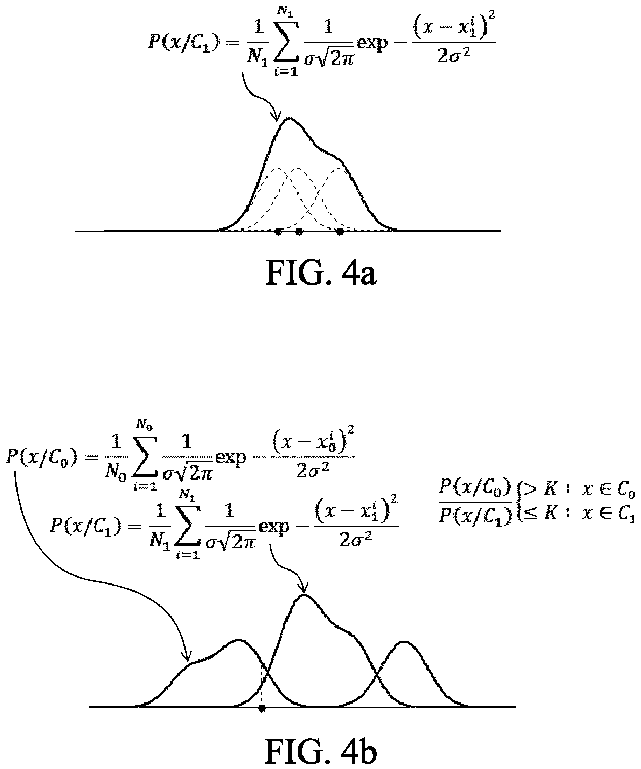

La deuxième étape S2 consiste à choisir un modèle particulier. Dans l'exemple décrit ci-après, il s'agit d'une méthode de classification utilisant des fonctions de vraisemblance, ici de type de Parzen, comme illustré sur la figure 4a. On peut ainsi construire des classes à plusieurs fonctions de vraisemblance et appliquer un seuillage par rapport à une variable K, comme illustré sur la figure 4b.

Ainsi, à partir d'un historique de données collectées à l'étape S3 (sur quelques dizaines d'années par exemple) et à partir desquelles sont définies des valeurs des descripteurs, il est possible d'appliquer un seuillage pour la définition d'un niveau d'alerte au-delà duquel un arrêt du pompage s'est avéré nécessaire. Ainsi, l'étape S4, il est possible d'établir une règle de décision, par apprentissage, d'arrêter ou non le pompage, en fonction des valeurs courantes des descripteurs.

On comprendra alors que les étapes S1 à S4 sont des étapes préalables à une étape courante S6 dans laquelle, à partir de valeurs courantes des six descripteurs obtenues en temps réel à une étape S5, on peut déterminer quantitativement un risque de colmatage, et en cas de dépassement d'une valeur de risque seuil à cette étape S6, l'unité de traitement 10 peut commander l'arrêt du dispositif de pompage à l'étape S7.

L'invention permet donc la détermination et l'alerte d'une arrivée massive de colmatant sur les organes de filtration fine d'une centrale nucléaire en bord de mer par analyse conjointe de données environnementales et de fonctionnement.

Elle permet de prévoir au moins quatre heures avant chaque nouvelle marée l'occurrence d'une arrivée massive de colmatant au cours de la marée à venir, une marée étant définie comment l'intervalle entre deux pleines mers en océan.

Souvent, une arrivée massive de colmatant consiste en un colmatage des organes de filtration fine (tambours filtrants) d'une installation de production électrique telle qu'un site nucléaire en bord de mer par des débris d'origine végétale, animale ou sédimentaire, issus d'un comportement exceptionnel du milieu environnemental. Un exemple typique est la conjonction d'une marée à fort coefficient, d'un vent fort et du déversement dans un estuaire de sédiments par un fleuve en période de débit élevé. L'invention propose alors d'utiliser un score qui est une probabilité d'occurrence d'arrivée massive de colmatant pendant la marée à venir, et un seuil d'alerte proposant au site de se prémunir face à l'arrivée massive de colmatant en mettant en place des parades (telles que le dés-enclenchement des pompes de production) car les éléments colmatant entraînent une perte de production énergétique importante et nécessitent des opérations de nettoyage coûteuses.

Préférentiellement, une arrivée d'éléments colmatant (ou "sare") est prévue par des techniques statistiques comme présenté ci-avant et il est évalué quantitativement un risque de colmatage. Le choix de cette modélisation et de la règle de décision permettant de produire le score probabiliste et le seuil d'alerte s'avèrent satisfaisant pour l'application envisagée.

L'estimation de la probabilité du risque de colmatage repose sur une modélisation statistique des variables explicatives du phénomène (les plus influentes) conjointe à une modélisation statistique de certaines données de capteur de la station de pompage, qui synthétisent les dates et heures des enclenchements en rotation du tambour selon une Vitesse Moyenne (MV) et Grande Vitesse (GV) des organes de filtration fine.

Comme indiqué précédemment, on peut choisir six descripteurs à partir desquels on applique une méthode statistique dite « de Parzen ».

Ils peuvent être dérivés de variables environnementales explicatives telles que :
- hydrologiques (par exemple les heures de pleine ou basse mer, les coefficients de marée, les débits moyens journaliers de fleuves ou rivières à estuaire tels que, en France, la Garonne, ou encore de la Dordogne, et leur hauteur d'eau), et
- météorologiques (vitesse et direction du vent).

Pour la gestion de ces descripteurs, deux paramètres interviennent ensuite dans l'étape de classification précitée:
- l'écart-type des Gaussiennes utilisées dans la méthode de Parzen (noté sigma dans les figures 4a et 4b), et
- un seuil utilisé pour l'attribution à l'une ou l'autre des classes après calcul des vraisemblances (noté K dans la figure 4b).

Le seuil K peut être déterminé par des tests tâtonnements.

Néanmoins, plus généralement, pour déterminer les valeurs de ces paramètres, on utilise la méthode de la validation croisée qui consiste à effectuer une série de tests de classification sur l'historique des marées pour différentes valeurs de paramètres (apprentissage statistique).

Dans un exemple de réalisation, on procède plus précisément comme suit:
- une grille de valeurs de sigma et de K à tester est définie,
- puis, pour chaque couple de valeurs (sigma, K) :
   - on sépare de façon aléatoire l'historique des marées en deux sous-ensembles :
      o un sous-ensemble d'apprentissage (80 %) et
      o un sous-ensemble de test (20 %)
         de sorte qu'au sein de chaque sous-ensemble, un ratio nb de marées avec colmatants / nb des marées sans colmatants soit préservé ;
   - Les marées du sous-ensemble d'apprentissage sont utilisées pour définir les fonctions de vraisemblances associées aux deux classes.
   - La règle de classification ainsi définie est appliquée aux marées du sous-ensemble de test.
   - Parmi les marées du sous-ensemble de test, on compte les erreurs de classification en distinguant les fausses alarmes (une marée non colmatante ayant été attribuée à la classe des marées colmatantes) et les non-détections (une marée colmatante ayant été attribuée à la classe des marées non colmatantes).
   - On réitère un nombre choisi de fois (quelques centaines d'itérations par exemple) la constitution des sous-ensembles en modifiant les sous-ensembles d'apprentissage et de test d'une itération à l'autre (tirages aléatoires). On considère finalement le nombre moyen de fausses alarmes et de non-détections sur le nombre choisi d'itérations. On obtient ainsi un point dans le plan "nb de non-détections" VERSUS "nb de fausses alarmes".

Dans l'exemple de la figure 5, la courbe présentée en trait plein montre la probabilité de colmatage obtenue en fixant le paramètre sigma à 2,5 et le seuil à 130. Ainsi, cette courbe illustre l'évolution temporelle de la probabilité a posteriori qui s'exprime en fonction de sigma et du seuil. Elle est comparée à la perte de charge mesurée par le capteur CAP en traits pointillés pour la même période.

En pratique, on fait varier néanmoins les deux paramètres en tâchant de se rapprocher le plus possible du cas 0 fausse alarme et 0 non-détection. Dans le cas illustré, les valeurs de paramètres qui donnaient le plus petit nombre de fausses alarmes tout en autorisant 1 (une) non-détection ont été retenues (ce qui représentait le meilleur compromis).

Il s'est avéré en outre que la méthode de Parzen est celle qui donne les meilleurs résultats d'estimation du risque de colmatage.

Bien entendu, les résultats statistiques peuvent être perfectionnés en utilisant en outre les données de marées futures, colmatantes et non-colmatantes.

Il est possible en outre d'utiliser un grand nombre de descripteurs, ce qui permet de diminuer le taux d'erreur. Néanmoins, les résultats obtenus avec six descripteurs présentent un taux d'erreur satisfaisant.

En outre, un descripteur avantageux peut consister à estimer la différence de hauteur d'eau entre l'intérieur et l'extérieur des tambours filtrants (appelée « perte de charge »). En effet, lorsque la perte de charge dépasse un seuil critique, un arrêt automatique de la centrale est habituellement provoqué. Ainsi, plutôt que d'estimer une variable binaire (colmatage ou non colmatage) qui correspond au dépassement ou non du seuil critique précité, la grandeur d'intérêt correspondant à la perte de charge peut être estimée quantitativement et il peut s'en décliner plus de deux réactions possibles.

On peut prévoir alors un dispositif d'alerte fonctionnant comme suit :
- envoi automatique d'un message (par exemple un courriel) quatre heures avant chaque nouvelle marée,
- chaque message contient un pronostic sur la survenue ou non d'un colmatage pendant la prochaine marée, comme présenté dans l'exemple ci-après :
   « Pronostic pour la marée du 16/11/2015 08:29:00 au 16/11/2015 20:50:00

### Marée estimée non colmatante

Détails :
- probabilité marée colmatante : 0,05
- probabilité marée non colmatante : 0,95

### Date du prochain pronostic : 16/11/2015 16:43:00 »

Une version avec interface utilisateur peut être prévue en outre pour permettre à l'utilisateur de régler les paramètres de l'application (modifications dans l'ensemble d'apprentissage, valeurs des paramètres, destinataires des courriels automatiques, etc.) et de pouvoir relancer des pronostics sur des marées passées.

Les différentes étapes qui aboutissent à l'envoi d'un courriel sont :
- la lecture de données actuellement en mémoire du dispositif d'alerte,
- le téléchargement des données les plus récentes pour compléter la base de données mise à jour en mémoire (mesures de débit, mesures de hauteurs d'eau, données de fonctionnement des tambours filtrants),
- le calcul à partir de ces données des six descripteurs associés à la prochaine marée,
- l'application de la méthode de Parzen pour déterminer la classe de la prochaine marée (ainsi que le calcul d'une probabilité de colmatage, fournie à titre indicatif).

On comprendra ainsi que la méthode de Parzen est appliquée à deux classes : celle des marées colmatantes et celles des marées non colmatantes. Ainsi, les évènements de colmatage sont pris en compte dans l'historique d'apprentissage, mais aussi les périodes sans colmatage.

Il est ainsi possible de fournir aux exploitants de la centrale un outil d'aide à la conduite des tranches. Les exploitants utilisent déjà un certain nombre d'indicateurs pour évaluer le risque de colmatage des tambours filtrants. Par la mise en œuvre de l'invention, il est possible d'évaluer plus finement le risque de colmatage.

Bien entendu, la présente invention ne se limite pas aux formes de réalisation décrites ci-avant à titre d'exemples ; elle s'étend à d'autres variantes.

Ainsi par exemple, la méthode selon l'approche de Parzen présentée ci-avant peut admettre des variantes.

En effet, cette méthode a montré, sur l'étude des années récentes, un comportement moyen correct. Toutefois, des variantes peuvent être envisagées, notamment en vue de réduire les faux positifs. En effet, on peut reprocher à la méthode selon l'approche de Parzen qu'elle parait *a priori* peu justifiée mathématiquement, ce pourrait dévaluer sa généricité.

L'approche de Parzen demande, pour être plus exacte, d'être calibrée de façon empirique, par un coefficient spécifique au site d'exploitation, dont le sens n'est cependant pas relié à une propriété particulière ou utile. L'approche de Parzen est donc perfectible et la méthode utilisée devrait pouvoir être défendue par des règles mathématiques logiques, indépendamment du cas d'étude considéré. En outre, l'approche de Parzen ne tient pas compte de la corrélation entre les co-variables, ce qui limite son pouvoir prédictif.

Par ailleurs, un problème connexe à la prévision probabiliste d'une arrivée massive de colmatant, via sa probabilité d'occurrence, est celui de la prévision de l'indicateur de différence de pression Δ_{P} sur une tranche d'exploitation particulière. Ce différentiel mesure la pression exercée par l'eau (perte de charge) retenue par colmatage sur les organes de filtration fine (tambours filtrants, par exemple). La mesure peut être produite par des chaînes de capteurs. Lorsque cette différence de pression atteint un niveau minimum seuil, on pilote automatiquement le déclenchement des pompes de production afin de permettre la sauvegarde de la fonction de filtration de l'eau brute sur la voie en fonctionnement.

Cet indicateur Δ_{P} de différence de pression peut donc révéler le phénomène de colmatage dans la station de pompage, et si sa gamme de valeur peut être prévue en fonction des covariables, il constitue un outil de pilotage plus fin (car concentré sur une ou plusieurs voies d'eau d'une tranche) que la probabilité d'arrivée massive de colmatant (notée AMC ci-après) imminente. De façon naturelle, cet indicateur peut être décrit comme une variable aléatoire, reliée à la variable multivariée décrivant l'AMC par un modèle probabiliste général. Le modèle probabiliste permettant de calculer précisément la probabilité d'AMC imminente devient donc un sous-modèle du modèle général précité. On comprendra ainsi qu'on peut ainsi disposer d'un indicateur en complément de la probabilité d'AMC, seule, pour l'élaboration du modèle.

Le procédé de détection d'AMC, caractérisé par une réponse probabiliste (probabilité ou non de survenue d'AMC dans les quatre heures), peut être amélioré de façon perceptible par :
- une formalisation mathématique théorique du calcul de cette réponse : le classifieur qui est reconstruit en pratique est une modélisation statistique directe du classifieur bayésien optimal défini par cette formalisation ;
- une méthode de calcul s'appuyant sur le caractère supposé aléatoire de chacune des covariables du problème ; la stratégie de calcul est fondé sur une distribution par « copules » en dimension supérieure à deux ; on tire parti du fait que les covariables du problème peuvent être considérées comme des variables aléatoires et non des variables déterministes ou des grandeurs d'indexation (tel que le temps, par exemple) ; cela permet d'envisager le problème de la classification supervisée comme un apprentissage statistique fondé sur la confrontation de plusieurs modélisations probabilistes ;
- la possibilité de gérer les covariables éventuellement non mesurées lors de l'étape de prévision (par exemple parce que les bases de données ne sont pas renseignées à temps), ce qui améliore ici la robustesse globale du procédé ;
- l'auto-calibration du procédé permettant de se remettre périodiquement à jour au fur et à mesure des marées, sans nécessité d'introduire de paramètres de calage supplémentaire, qui confère alors un caractère plus générique en permettant un déploiement sur tout site.

Relativement à la définition générale de l'invention dans laquelle on prévoit une étape d'élaboration d'un modèle statistique basé notamment sur un historique des paramètres relatifs au cours d'eau pour lesquels un colmatage des filtres a été observé, on comprendra que dans cette variante de réalisation, l'historique de colmatage des filtres peut être ajouté aux historiques déjà existants.

Le procédé de détection selon cette variante propose alors la prévision de la valeur du différentiel de pression au niveau des organes de filtration (par exemple les tambours filtrants), au cours de la prochaine marée. Cette prévision est probabiliste et fournit l'ensemble de la distribution prédictive du différentiel de pression, accompagné des principales statistiques utiles (par exemple la médiane, la valeur moyenne, les quantiles extrêmes, etc.). Ce procédé utilise les mêmes outils statistiques que le procédé de détection et peut également gérer l'absence de mesures sur certaines variables.

Il a été constaté que cette variante de réalisation permettait d'améliorer la réduction de faux positifs de façon significative. Les vrais positifs sont également bien détectés pour des relevés statistiques récents.

## Revendications

1. Procédé d'aide à la gestion d'un dispositif de pompe propre à alimenter un circuit d'une installation de production électrique, par de l'eau issue d'un cours d'eau naturel, l'eau en amont du circuit comportant des matériaux susceptibles de colmater un ou plusieurs filtres prévus en entrée du circuit, **caractérisé en ce qu'**on relève au moins des paramètres relatifs au cours d'eau et ayant une influence sur une quantité de matériaux susceptibles de colmater lesdits filtres, et :
- Au cours d'une étape préalable, on élabore un modèle statistique basé au moins sur un historique desdits paramètres relatifs au cours d'eau pour lesquels un colmatage des filtres a été observé,
- Au cours d'une étape courante, on relève des paramètres courants relatifs au moins au cours d'eau et on utilise ledit modèle statistique avec lesdits paramètres courants, pour évaluer un risque d'arrivée de matériaux colmatant, et
- En fonction du risque évalué, on génère un signal d'alerte en vue de désactiver le dispositif de pompe à un instant choisi.

2. Procédé selon la revendication 1, dans lequel le signal d'alerte est formé en vue de désactiver en outre le dispositif de pompe pendant une durée choisie en fonction du risque évalué.

3. Procédé selon l'une des revendications précédentes, dans lequel l'eau comprend de l'eau de mer et lesdits paramètres relatifs au cours d'eau incluent au moins un coefficient de marée.

4. Procédé selon la revendication 3, dans lequel lesdits paramètres relatifs au cours d'eau incluent des données hydrologiques parmi au moins un horaire de pleine mer/basse mer.

5. Procédé selon l'une des revendications précédentes, dans lequel l'eau comprend de l'eau d'une rivière, et lesdits paramètres relatifs au cours d'eau incluent des données hydrologiques comprenant un débit moyen et une hauteur d'eau dans la rivière.

6. Procédé selon l'une des revendications précédentes, dans lequel les paramètres relatifs au cours d'eau incluent des données météorologiques de vitesse et de direction du vent par rapport au cours d'eau.

7. Procédé selon l'une des revendications précédentes, dans lequel, au cours de l'étape courante, on relève en outre des paramètres courants de colmatage sur lesdits filtres et on utilise le modèle statistique avec :
- les paramètres courants relatifs au cours d'eau, et
- les paramètres courants de colmatage.

8. Procédé selon la revendication 7, dans lequel les filtres comportent des tambours filtrant mis en rotation pour éjecter tout ou partie des matériaux colmatant, la vitesse de rotation des tambours étant pilotée en fonction d'une information de colmatage relevée par au moins un capteur, et dans lequel lesdits paramètres de colmatage comportent l'information de colmatage que relève ledit capteur.

9. Procédé selon l'une des revendications 7 et 8, dans lequel le modèle statistique appliqué est issu de la méthode dite de Parzen avec des descripteurs comprenant :
- les paramètres relatifs au cours d'eau, et
- les paramètres de colmatage.

10. Programme informatique **caractérisé en ce qu'**il comporte des instructions pour la mise en œuvre du procédé selon l'une des revendications 1 à 9, lorsque ce programme est exécuté par un processeur.

11. Dispositif d'aide à la gestion d'un dispositif de pompe, **caractérisé en ce qu'**il comporte un circuit pour la mise en œuvre du procédé selon l'une des revendications 1 à 9, et comportant au moins :
- une interface d'entrée (13) pour recevoir des données des paramètres courants relatifs au moins au cours d'eau,
- une interface de sortie (15) pour délivrer le signal d'alerte en vue de désactiver le dispositif de pompe à un instant choisi,
- et un processeur (16), capable de coopérer avec les interfaces d'entrée et de sortie et avec une mémoire stockant au moins des instructions d'un programme informatique selon la revendication 10, pour, en fonction au moins des données acquises par l'interface d'entrée (13), exécuter le procédé selon l'une des revendications 1 à 9.

## Patentansprüche

1. Verfahren zum Unterstützen der Verwaltung einer Pumpenvorrichtung, welche dazu geeignet ist, einen Kreislauf einer Anlage zur Erzeugung von Elektrizität mit Wasser zu versorgen, welches von einem natürlichen Wasserlauf stammt, wobei das Wasser stromaufwärts des Kreislaufs Materialien umfasst, welche dazu neigen, einen oder mehrere Filter zu verstopfen, welche beim Eingang des Kreislaufs vorgesehen sind, **dadurch gekennzeichnet, dass** wenigstens Parameter bezüglich des Wasserlaufs aufgenommen werden, und welche einen Einfluss auf eine Menge des Materials aufweisen, welches dazu neigt, die Filter zu verstopfen, und:
- während eines vorangehenden Schritts ein statistisches Modell erstellt wird, welches wenigstens auf einer Historie der Parameter bezüglich des Wasserlaufs basiert, für welche eine Verstopfung der Filter beobachtet worden ist,
- während eines laufenden Schritts laufende Parameter bezüglich wenigstens des Wasserlaufs aufgenommen werden und das statistische Modell mit den laufenden Parametern verwendet wird, um ein Risiko eines Ankommens von verstopfendem Material zu ermitteln, und
- als Funktion des ermittelten Risikos ein Alarmsignal hinsichtlich eines Deaktivierens der Pumpenvorrichtung zu einem ausgewählten Zeitpunkt erzeugt wird.

2. Verfahren nach Anspruch 1, wobei das Alarmsignal hinsichtlich eines zusätzlichen Deaktivierens der Pumpenvorrichtung während einer als Funktion des ermittelten Risikos gewählten Dauer erzeugt wird.

3. Verfahren nach einem der vorhergehenden Ansprüche, wobei das Wasser Meerwasser umfasst und die Parameter bezüglich des Wasserlaufs wenigstens einen Gezeiten-Koeffizienten umfassen.

4. Verfahren nach Anspruch 3, wobei die Parameter bezüglich des Wasserlaufs hydrologische Daten umfassen, einschließlich wenigstens einer Zeitangabe zu Hochwasser/Niedrigwasser.

5. Verfahren nach einem der vorhergehenden Ansprüche, wobei das Wasser Wasser eines Flusses umfasst und die Parameter bezüglich des Wasserlaufs hydrologische Daten umfassen, einschließlich einer mittleren Flussrate und einer Wasserhöhe des Flusses.

6. Verfahren nach einem der vorhergehenden Ansprüche, wobei die Parameter bezüglich des Wasserlaufs meteorologische Daten der Geschwindigkeit und der Richtung des Windes im Verhältnis zu dem Wasserlauf umfassen.

7. Verfahren nach einem der vorhergehenden Ansprüche, wobei während des laufenden Schritts ferner laufende Parameter einer Verstopfung der Filter aufgenommen werden und das statistische Modell verwendet wird mit:
- den laufenden Parametern bezüglich des Wasserlaufs, und
- den laufenden Parametern der Verstopfung.

8. Verfahren nach Anspruch 7, wobei die Filter Filtertrommeln umfassen, welche in Rotation versetzt werden, um das ganze oder einen Teil des verstopfenden Materials auszustoßen, wobei die Rotationsgeschwindigkeit der Trommeln als Funktion einer Verstopfungsinformation gesteuert wird, welche mittels wenigstens eines Sensors aufgenommen wird, und wobei die Parameter der Verstopfung Verstopfungsinformationen umfassen, welche von dem Sensor aufgenommen werden.

9. Verfahren nach einem der Ansprüche 7 und 8, wobei das angewendete statistische Modell aus der sogenannten Parzen-Methode hervorgeht, mit Deskriptoren umfassend:
- die Parameter bezüglich des Wasserlaufs, und
- die Parameter der Verstopfung.

10. Computerprogramm, welches **dadurch gekennzeichnet ist, dass** es Anweisungen zum Durchführen des Verfahrens nach einem der Ansprüche 1 bis 9 umfasst, wenn das Programm von einem Prozessor ausgeführt wird.

11. Vorrichtung zum Unterstützen der Verwaltung einer Pumpenvorrichtung, **dadurch gekennzeichnet, dass** es eine Schaltung zum Durchführen des Verfahrens nach einem der Ansprüche 1 bis 9 umfasst und ferner wenigstens umfasst:
- eine Eingang-Schnittstelle (13) zum Empfangen von Daten von laufenden Parametern bezüglich wenigstens des Wasserlaufs,
- eine Ausgang-Schnittstelle (15) zum Liefern des Alarmsignals hinsichtlich eines Deaktivierens der Pumpenvorrichtung zu einem ausgewählten Zeitpunkt,
- und einen Prozessor (16), welcher in der Lage ist, mit den Eingang- und Ausgang-Schnittstellen und mit einem Speicher zusammenzuwirken, welcher wenigstens Anweisungen eines Computerprogramms nach Anspruch 10 speichert, um als Funktion von wenigstens den Daten, welche durch die Eingang-Schnittstelle (13) erhalten werden, das Verfahren nach einem der Ansprüche 1 bis 9 auszuführen.

## Claims

1. Method for assisting with the management of a pumping device capable of supplying a circuit of a power production facility with water taken from a natural watercourse, the water upstream of the circuit comprising materials liable to clog one or more filters provided at the inlet to the circuit, wherein at least parameters relating to the watercourse and having an influence on the quantity of materials likely to clog said filters are collected, and:
- during a previous step, a statistical model is developed that is at least based on historical data for said parameters relating to the watercourse for which clogging of the filters has been observed,
- during a current step, current parameters relating to at least the watercourse are collected and said statistical model is used in conjunction with said current parameters to assess a risk of an influx of clogging materials, and
- on the basis of the assessed risk, an alert signal for deactivating the pumping device at a selected time is generated.

2. Method according to claim 1, wherein the alert signal is generated for the further purpose of deactivating the pumping device for a duration selected in accordance with the assessed risk.

3. Method according to one of the preceding claims, wherein the water comprises seawater, and said parameters relating to the watercourse include at least one tidal coefficient.

4. Method according to claim 3, wherein said parameters relating to the watercourse include hydrological data from at least one high tide/low tide.

5. Method according to one of the preceding claims, wherein the water comprises water from a river, and said parameters relating to the watercourse include hydrological data comprising an average flow rate and a water level in the river.

6. Method according to one of the preceding claims, wherein the parameters relating to the watercourse include meteorological data on the speed and direction of the wind relative to the watercourse.

7. Method according to one of the preceding claims, wherein, during the current step, the current clogging parameters for said filters are further collected and the statistical model is used with:
- current parameters relating to the watercourse, and
- current clogging parameters.

8. Method according to claim 7, wherein the filters comprise filtering drums rotated so as to eject some or all of the clogging materials, the rotational speed of the drums being controlled on the basis of clogging information collected by at least one sensor, and wherein said clogging parameters include clogging information collected by said sensor.

9. Method according to one of claims 7 and 8, wherein the statistical model applied is derived from the Parzen-window method with descriptors comprising:
- parameters relating to the watercourse, and
- clogging parameters.

10. Computer program **characterized in that** it comprises instructions for implementing the method according to one of claims 1 to 9, when said program is executed by a processor.

11. Device for assisting with the management of a pumping device, **characterized in that** it comprises a circuit for implementing the method according to one of claims 1 to 9, and comprising at least:
- an input interface (13) to receive data of the current parameters relating to the watercourse, and
- an output interface (15) to deliver an alert signal for deactivating the pumping device at a selected time,
- and a processor (16), capable to cooperate with the input and output interfaces and with a memory storing at least instructions of a computer program according to claim 10, for, on the basis of at least data acquired by the input interface (13), implement the method according to one of claims 1 to 9.
